# EUROPEAN PATENT SPECIFICATION

(11) **EP 2 476 573 B1**
(45) Date of publication and mention of the grant of the patent: **19.05.2021**
(21) Application number: 12150886.5
(22) Date of filing: 12.01.2012
(51) Int. Cl.: B60L 1/10, B60L 1/12, B60L 1/00, H02J 3/38, B60L 1/04, B60L 1/16, B60L 3/00, B60L 7/18

(54) **Energy management system for trains with flexible formations incorporating regenerative braking**
Energieverwaltungssystem für Züge mit flexiblen Formationen mit regenerativer Bremsung
Système de gestion d'énergie pour trains avec formations flexibles incorporant un freinage régénératif

(30) Priority: 14.01.2011 GB 201100616
(43) Date of publication of application: 18.07.2012
(73) Proprietor: Kinghorn, John, Brockenhurst Hampshire SO42 7RF (GB)
(72) Inventor: Kinghorn, John, Brockenhurst Hampshire SO42 7RF (GB)
(74) Representative: CSY Herts

(56) References cited:
- US-A- 4 892 204
- US-A1- 2006 005 739
- US-A1- 2006 025 902
- US-A1- 2008 223 250
- HUNTER P L ET AL: "FAULT TOLERANT, HOT-PLUGGABLE POWER SYSTEM DESIGN", PROCEEDINGS OF THE ANNUAL APPLIED POWER ELECTRONICS CONFERENCE AND EXPOSITION (APEC). ORLANDO, FEB. 13 - 17, 1994; [PROCEEDINGS OF THE ANNUAL APPLIED POWER ELECTRONICS CONFERENCE AND EXPOSITION (APEC)], NEW YORK, IEEE, US, vol. 2, 13 February 1994 (1994-02-13), pages 815-822, XP000467397,
- LENHARD D ET AL: "ELEKTRISCHE AUSRUESTUNG DES TRIEBZUGES LIREX BAUREIHE 618/619 FUER DB REGIO", ELEKTRISCHE BAHNEN, OLDENBOURG INDUSTRIEVERLAG, MUNCHEN, DE, vol. 98, no. 8, 1 August 2000 (2000-08-01) , XP000959112, ISSN: 0013-5437

## Description

### Background to the Invention

The concept of regenerative braking is well known, and has been applied to a few rail vehicles for at least half a century. Recently environmental concerns and financial pressures to improve energy efficiency have led to a renewed emphasis on the technique, with new technologies for power conversion and energy storage facilitating the process. Many significant difficulties remain, however, as obstacles to the universal introduction of regenerative braking on all kinds of trains.

US2006/0005739 A1 relates to a self-powered railroad system which, in one embodiment, comprises a locomotive, a control source, and a plurality of load units, some of which are railroad vehicles comprising components that provide for selective operation in a motoring mode, a coasting mode, or a dynamic braking mode. The self-powered railroad system may also comprise a control source and at least one railroad vehicle, controlled by the control source, such as for coupling, uncoupling, and moving to or from a loading dock.

US2006/0025902 A1 relates to a locomotive having at least one electrical load connected to at least one power source via a locomotive power carrying bus, in which a system for ensuring a current connection between the at least one power source and the at least one electrical load is provided. The system includes a first rectification device, wherein the first rectification device is connected between the at least one electrical load and the locomotive power carrying bus to provide a rectified current connection between a first power source and the at least one electrical load. The system further includes a second rectification device, wherein the second rectification device is connected between the at least one electrical load and the locomotive power carrying bus to provide a current connection between a second power source and the at least one electrical load and at least one auxiliary rectification device, wherein the at least one auxiliary rectification device is connected to the at least one electrical load and at least one of the first rectification device and the second rectification device to ensure a continuous current connection between the at least one power source and the at least one electrical load.

US4,892,204 relates to a coupler control system for railway vehicles that provides isolation of the electric and pneumatic lines of a rail vehicle from its corresponding electric and/or pneumatic intervehicle interface when that end of the vehicle is in an uncoupled condition. A combination proximity sensor and switch is positioned within the mechanical hook coupling housing so as to sense the actual engagement of the mechanical hooks of a pair of vehicles. The switch then closes and becomes operative to initiate a coupling cycle during which the onboard electric and pneumatic lines are coupled to the associated electric and pneumatic interfaces to provide continuity with the vehicle to which it is coupled. Included in the circuitry for the sensor switch is a diode circuit arranged to permit looping of the sensor switch output across the electric interface onto the adjacent car and back through the interface through the use of only two interface connector pins per interface.

Hunter P L Et Al's: "Fault Tolerant, Hot-Pluggable Power System Design" relates to the requirements and features necessary for power systems that are both fault-tolerant and hot-pluggable. These requirements impose many important design considerations that go beyond those of a conventional power supply, including using specially designed, high-quality, pluggable connectors. An example of a power system designed to meet these requirements is also briefly discussed.

Lenhard D Et Al: "Elektrische Ausruestung des Triebzuges Lirex Baureihe 618/619 Fuer DB Regio" relates to a six-part diesel-electric prototype of a new low-floor modular vehicle family which was developed as LIREX® Series 618/619 for German regional rail services. Significant innovations include permanently energised traction generators, flywheel brake energy storage and the arrangement of essential drive components on the vehicle roof. The modular drive concept also allows for variations for electrified operation and hybrid solutions.

Regenerative braking recovers kinetic or potential energy from a moving train when decelerating or descending gradients, and converts it into electrical power. The question then is what to do with that power.

It can be simply dissipated in an electrical resistance, a technique known as rheostatic braking. This wastes the energy, but may be useful for other reasons, such as providing additional braking force for the train and reducing wear in mechanical brakes.

It can be converted into a suitable form to return to the power distribution system such as an overhead line or third rail in an electrified railway. The recycled energy thus helps to power other trains on the network, reducing the demand for energy overall. However precautions need to be taken to ensure that there are trains requiring power when other trains are providing power; or substantial energy storage systems are needed on the network to smooth out voltage fluctuations. Also losses in power conversion and distribution may be significant, reducing the overall benefit. Naturally this approach cannot be used if the railway is not electrified.

It can be stored in a battery, motor generator and flywheel, supercapacitor or other energy storage system locally in the rail vehicle which provides regenerative braking. Using a suitable control system, the stored energy can then be converted back into mechanical form to provide additional traction force when required, reducing the demand for fuel or electrical energy. Of course this approach works whether the railway is electrified or not, but the battery or other storage system is expensive, bulky and heavy when it has the capacity needed for the energy levels generated by a typical modern, heavy and fast train.

The storage system can be distributed around other vehicles of the train to avoid the problems of bulk and weight, but this requires high power bus lines between vehicles which give extra cost and complication.

There is, however, another possible destination for recycled power from regenerative braking. Modern passenger coaches use electric heating, lighting and air conditioning, and if much of this energy for train services could be recycled from regenerative braking it would reduce the demand for fuel or power and improve the overall energy efficiency of the train. Although the improvement in energy efficiency might be quite modest (a typical train might need only 10% of the total power for air conditioning, for example, compared with 90% for traction), the smaller power levels involved make the energy storage systems such as batteries less expensive, and it is still worthwhile pursuing moderate energy savings given the cost of energy over the lifetime of the train. Consequently power for train services such as air conditioning is the major destination for recycled energy in the energy management system described in this invention. The system is internal to the train and works whether the railway is electrified or not.

A further objective of the invention is to minimise the electrical modifications needed to coaches or locomotives using this system, using a conventional 'hotel bus' arrangement to distribute power in the train.

A further objective of the invention is to improve the energy efficiency of trains using conventional forms of traction such as locomotives, regardless of whether they are equipped individually with regenerative braking or not.

A further objective of the invention is to facilitate the maximum flexibility of train formations, including changes of train length and type of traction.

A further objective of the invention is to maintain power to both sections of a train when it is split into two parts during shunting operations.

A further objective of the invention is to automate the distribution of power for train services when train formations are changed, avoiding conflicts in power generation from multiple vehicles and setting default priorities for power sources which can still be altered later by higher level algorithms when the new train formation status has been fully assessed.

According to a first aspect of the invention, there is provided an energy management system for a train formation as claimed in Claim 1.

### Description of the Invention

Embodiments of the invention will now be described, by way of example, and with reference to the drawings in which:
Figure 1 illustrates a recycling vehicle - electric brake van;
Figure 2 illustrates a typical power generation sequence;
Figure 3 illustrates a recycling vehicle - electric brake and traction van;
Figure 4 illustrates a recycling vehicle - driving trailer;
Figure 5 illustrates a power distribution arrangement using automatic couplers;
Figure 6 illustrates a power control arrangement; and
Figure 7 illustrates a control arrangement for vehicles with adjustable AC hotel power.

The invention applies to trains comprising:
- one or more vehicles which require electrical power for train services which do not have a source of power themselves (e.g. a coach)
- one or more vehicles which do have a source of power for traction and train services (e.g. a locomotive or power car)
- one or more vehicles which do not have a source of power or fuel externally, but which do incorporate regenerative braking and energy storage. This type can be described as the 'recycling vehicle'.

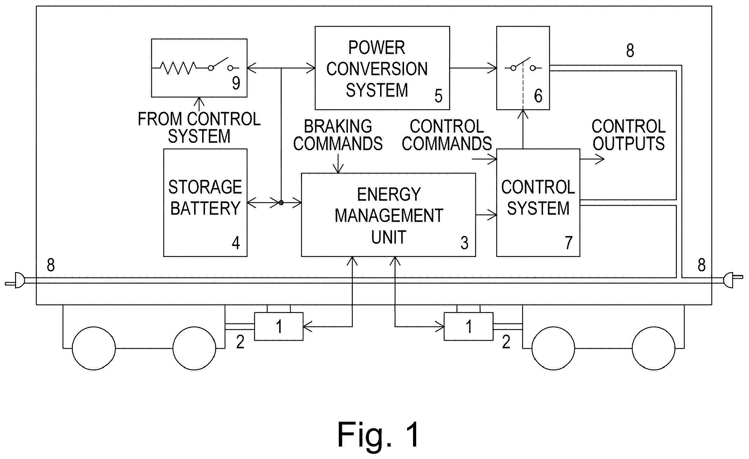

The recycling vehicle can take various forms. In the simplest embodiment, shown in figure 1, it might be described as an 'electric brake van'. It contains one or more traction motors used as generators (1) coupled to the wheels of the vehicle by drives (2), the electrical output of the motors passing through an energy management unit (3) to a storage battery or other energy storage system (4). This in turn is connected to a power conversion system (5) which can provide a power output to other vehicles via a switch (6) when permitted to do so by the control system (7).

The output of the recycling vehicle passes to other vehicles in the train via a standard electrical bus of conventional form. This has been described in the past as ETH (Electric Train Heating) or ETS (Electric Train Supply), and is now commonly known as the 'hotel bus' as it provides power for lighting, heating, mains sockets for laptops, hand dryers, etc. as would be required in a hotel. It is shown as (8) in figure 1.

The recycling vehicle operates as follows. During braking, a braking control system located somewhere in the train monitors the controls from the driver and prevailing conditions and decides the level of brake force to be applied by the various vehicles in the train. Typically there will be a blending of different types of brakes, with regenerative braking used mostly at high speeds and friction braking at low speeds. Within the recycling vehicle, the energy management unit (3) accepts such commands from the braking control system and controls the rate of charging of the battery to give the desired brake force.

As a result, the battery (4) becomes further charged after each period of deceleration or restraining speed, and at some point will reach a sufficient charge level that it can now be used to power the hotel bus for a period. The control system (7) then sends a request to the locomotive to cease supplying hotel power, and when it has confirmed that this has been done switches on the output of the power conversion system (5) via the switch (6) so that the recycling vehicle now supplies hotel power to the train.

Now the battery (4) will discharge as it supplies energy, eventually reaching a threshold level when the control system (7) decides it should stop the discharge. It switches off the output of the power conversion system using switch (6), at the same time requesting the locomotive to resume its supply of hotel power. The locomotive does so after confirming that hotel power from the recycling vehicle has been switched off. Then the conventional way of operating the hotel power distribution has been restored, and the battery in the recycling vehicle is ready to be recharged again during the next period of regenerative braking.

Normally the system is designed so that the capacity of the battery or other energy storage system in the recycling vehicle is greater than the energy that can be recovered by regenerative braking of the heaviest train from its maximum permitted speed to a stop. The braking force that can be applied by the recycling vehicle is, however, limited by adhesion considerations dependent on the vehicle weight. As a result, only a modest proportion of the total kinetic energy of the train can be recovered by the recycling vehicle in these conditions; however this energy level is still significant in relation to the demand for hotel power under typical operating conditions.

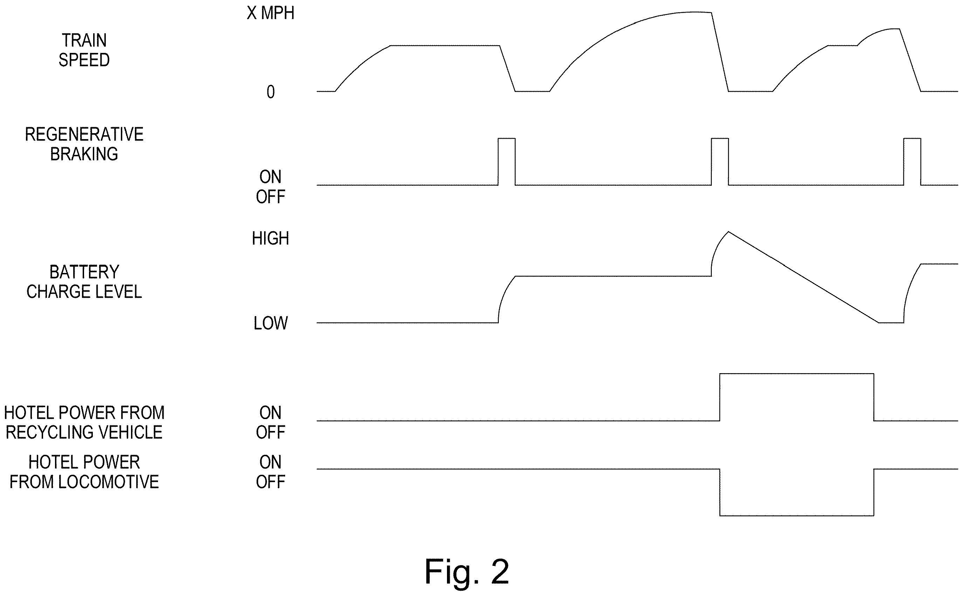

When the train brakes to a stop from a lower top speed, or is shorter and lighter than the maximum allowed, the battery will be charged to a smaller extent during each period of regenerative braking. Sooner or later, however, after several stops the battery charge level will reach the threshold where it can start to supply energy for hotel power and the sequence of events described above is initiated. An example of such a pattern of operation is shown in figure 2, which plots the speed of the train over time, the periods of regenerative braking, the battery charge level and the periods of supplying hotel power by the recycling vehicle and by the locomotive.

In this way the energy recovered through regenerative braking in the recycling vehicle reduces the requirement for power from the locomotive, improving the overall energy efficiency of the train. Naturally the charging and discharging periods will depend heavily on the route topography, stopping patterns and formation of the train, but this is of no practical consequence as power is maintained at all times. The very brief interruptions to the supply during switchover between the locomotive and recycling vehicle will hardly be noticed by passengers, especially if the lighting systems have a small degree of energy storage to avoid flicker.

Although the sequence of events described above is the normal operating pattern, abnormal situations can occur. On a day with moderate temperatures and a short train the hotel power load for air conditioning might be relatively low, and if the train is descending a long gradient with regenerative braking being used to limit its speed the power generated might exceed the load considerably. As a result, the battery charge level will continue to rise, perhaps approaching the limit of its capacity.
In this case, the control system switches in a load resistance (9 in figure 1) when an upper charge level is reached to dissipate the surplus energy. Similarly, the load resistance is switched on by the control system during regenerative braking under fault conditions such as the hotel bus becoming disconnected or the battery developing problems. This allows the recycling vehicle to maintain the same brake force as normal, with no need to limit the speed of the train for safety reasons.

In this simplest embodiment, the recycling vehicle can be added to a conventional train with no modifications needed for the coaches; the power conversion system is designed to provide hotel power according to the established standards in use. Locomotives or power cars do need modifying slightly, however; a control system needs to be added so that their hotel power generation can be switched on and off as described above, and a communication method between the control systems of the locomotive and recycling vehicle needs to be established. This can be done in various ways, such as modulating existing signalling wires with new sequences, or introducing new communication channels using cables, optical transmission or radio.

According to requirements, the recycling vehicle can be constructed with or without other facilities such as accommodation for staff or passengers, luggage space etc. In this form, it is rather like a traditional brake van, but with electrical braking predominantly rather than mechanical braking.

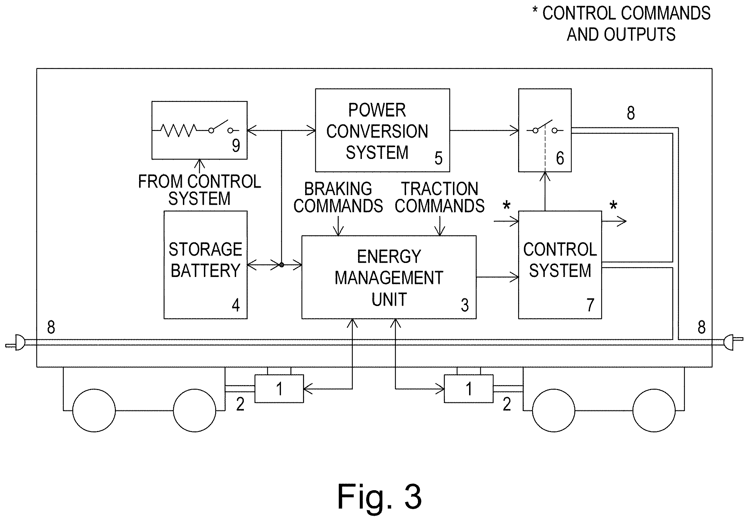

The second embodiment of the recycling vehicle is shown in figure 3. In this form, it might be described as an 'electric brake and traction van'. It is almost the same as the electric brake van already described, but the energy management unit (3) is now bidirectional and can accept commands for traction as well as braking. The traction motors are now used both as motors to provide traction from a discharging battery, and as generators to provide braking force while charging the battery.

The process of reusing energy from braking to provide additional traction later is well known. Since, however, the battery capacity in this invention is quite modest in relation to the energy demands for traction, the usefulness of providing a facility for traction in the recycling vehicle might be questioned.

The first application envisaged for the traction facility is as a short term assistance to improve performance when a train is running late. Normally the recycling vehicle would just provide hotel power as described earlier, but if a train is delayed the energy in the battery would (on request by the driver) provide instead additional traction to improve acceleration or speed. This would be especially useful in situations where the delay is caused by poor rail conditions such as leaves on the line giving low adhesion; using traction from an additional vehicle might help to reduce slipping and get the train back on schedule.

The second application envisaged for the traction facility is to reduce the noise and pollution caused by diesel locomotives or power cars when accelerating away from stations. At low speeds relatively little power is needed, and the majority of this could come from the recycling vehicle rather than the locomotive, reusing the energy which has been stored recently in regenerative braking when coming to a stop in the station. Once the recycling vehicle has accelerated the train to a modest speed and it is well clear of the station environment, the locomotive then takes over the task of supplying traction power at the increasingly higher levels required and its noise and pollution are less objectionable with fewer people in the immediate vicinity.

The third application envisaged for the traction facility is to rescue the train when the locomotive or its power supply suffers a major failure. The energy levels available from the recycling vehicle will not be sufficient in general to provide normal train speeds, but they should be enough to get the train safely to the next station at lower speeds under most conditions.

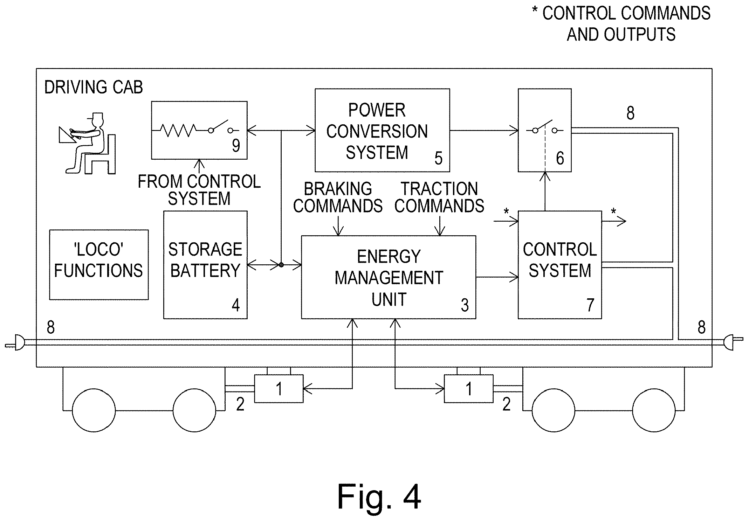

A third embodiment of the recycling vehicle is shown in figure 4. In this case, one or more driving cabs are added to the configuration of figure 3, and the vehicle can be described as a 'driving trailer'. It would often be located at one end of the train, with a locomotive at the other end. In common with a conventional driving trailer, it allows the train to be driven from either end, either hauled or propelled, to avoid the need for shunting at termini.

In this case, however, the recycling vehicle has also sufficient additional equipment (such as an air compressor for conventional brakes) to allow it to act independently of other vehicles like a locomotive. There is no external fuel source or power supply: the only source of energy for the vehicle is stored in the battery from regenerative braking. This energy is quite sufficient for the recycling vehicle to perform low speed shunting operations, which gives greater flexibility for altering train formations. As convenient, the locomotive at one end of the train and/or the driving trailer at the other end of the train can shunt coaches or other vehicles to and from sidings, and there is no need to provide special shunting engines. Effectively, the train contains its own built-in shunting locomotive.

The ability to supply hotel power from two vehicles, one at each end of the train, makes it possible to maintain power when a train is divided. For example, a train might cover part of its route on an electrified network, then has to continue its journey on a section of railway which is not electrified. In this case, the electrically hauled (or propelled) train decelerates to a stop at the boundary station, and regenerative braking in the driving trailer charges up the battery in the process. The electric locomotive is then detached from the train, but there is sufficient charge in the battery to allow the driving trailer to maintain hotel power for a short period. A new diesel locomotive is attached to take the train forward, which then resumes supplying hotel power to the train and power from the driving trailer is switched off again.

A similar process can take place when a combined train is divided into two sections at a junction to serve two different routes. When the train is divided, the locomotive supplies hotel power to one part of the train, and the driving trailer maintains power to the other part. A new driving trailer is then coupled to the section of train with a locomotive, performing the shunting movements necessary using its own recycled power. That part can then depart on one route. A new locomotive is coupled to the section of train with a driving trailer, and that section can now depart on the second route.

The same process can be repeated as many times as necessary to serve multiple routes originating as one combined train. In the reverse direction, when trains are combined, both locomotives and driving trailers can shunt sections of train together as necessary and then withdraw to sidings under their own power as appropriate. There is no need to provide separate shunting locomotives.

If trains use conventional couplers, coupling and uncoupling operations (including plugging in the necessary electrical connectors for the hotel bus) will be performed manually, and switching of power supplies can be done manually too. Doing it this way is rather costly in staff and time consuming, however, and it is a somewhat dangerous job too. Modern railway networks will prefer to use automatic couplers to eliminate the need for staff on the track in shunting operations, and this means that the control of the distribution of hotel power should be automated too. This task is a further objective of the invention.

The essence of the problem to be solved is the need to re-assess the formation of the train when any coupling or uncoupling operation has been carried out, and to make some decisions about which vehicle(s) should be supplying hotel power to where. If, however, two sections are suddenly coupled together, it will take some time for even the cleverest train information system to work out exactly which vehicles are now present and what their power generation capabilities are. Until the couplers connect and information flows, the overall train control system has no clue about what has just been shunted into it. If a coupling operation results in all hotel power being disconnected, there could be an interruption of several tens of seconds before the overall train control system gets round to working out what should be done and switching the power on again, which is clearly undesirable. On the other hand, leaving the power on could produce some spectacular overloads if, for example, a diesel-powered section is shunted onto a driving-trailer-powered section generating AC hotel power at a different frequency or phase.

The invention solves this problem using a two step approach. In the first step, the detection of any coupling or uncoupling activity (which is sensed by a signal from all couplers connected together) results in a rapid disconnection of hotel power from all sources and the initiation of a default restart process. This process assigns a time delay (from zero to a few seconds) to a particular type of vehicle which can supply hotel power before the vehicle attempts to supply power. The vehicle only switches on its hotel power if, when its time delay is up, no power is being supplied to the hotel bus yet (i.e. some other vehicle did not do this first). Time delays are allocated to vehicles according to the desired priority in supplying power. For example, a high powered electric locomotive has a short time delay, a medium powered diesel locomotive has a medium time delay, and a driving trailer has a long time delay. The result is that when a locomotive and driving trailer are coupled together through a train, the locomotive always wins the race to supply hotel power initially. Similarly, if the electric and diesel locomotive end up in the same train formation, the electric locomotive wins initially.

This distribution of hotel power holds until the second step takes place, which is the result of the overall train control system algorithms re-asserting their overall authority when they have a full picture of the formation of the train and the status of the power generation facilities within it. This second step might result in a reallocation of responsibility for providing hotel power between vehicles, or it might leave the allocation unchanged. For example, if the battery charge level in the driving trailer is rather high, the energy management part of the overall train control system might switch off the locomotive and turn on the driving trailer for a period.

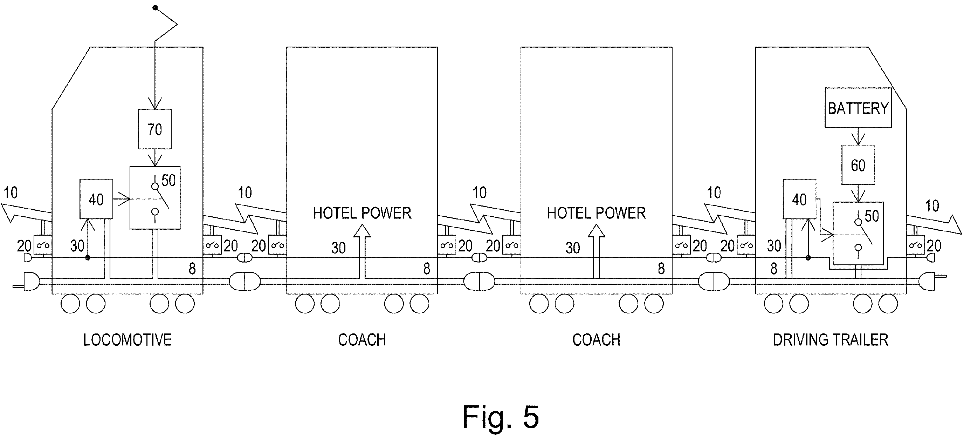

The arrangement of the systems for performing these functions in a typical train is shown in figure 5. The automatic couplers between vehicles (10) incorporate a switch (20) which is activated during coupling or uncoupling; typically this will be linked to a mechanical latch arrangement which locks vehicles securely together in one position and is released (perhaps by air pressure) to permit uncoupling in the other position. Shunting vehicles together also moves the latch transiently and activates the switch for a short period.

The outputs from all coupler switches (20) are connected together, via dedicated pins on the electrical connectors of the automatic couplers and wiring through each vehicle to the couplers at each end of the vehicle (or by some multiplexing arrangement with other communication methods giving a similar effect). As a result, when any coupling or uncoupling operation takes place, all vehicles currently coupled to that operation have this common switch signal (30) activated immediately. This signal is connected to the control systems (40) of all vehicles capable of supplying hotel power, and receipt of this signal causes a rapid disconnection of hotel power by turning off the switches (50) connecting the power conversion units (60), transformers (70) or other generators to the hotel bus (8).

To avoid high current transients on the hotel bus when sections of trains are shunted together, the power switches (50) need to turn off the power faster than the time taken between first activating the coupler switches (20) and the hotel bus connectors coming into contact. This can be readily achieved using electronic power switches. If mechanical contactors or relays are used for the power switches, however, achieving switch-off in the few hundred milliseconds it takes to couple vehicles might be a challenge. In this case, an enhancement to the coupler design (not shown in the diagrams) can solve the problem. A hotel bus contactor is incorporated into the coupler design, arranged so that the contactor will only close a short delay after successfully coupling to another vehicle. The delay can be realised using a spring and damper or a similar mechanical arrangement, arranged so that the time taken for the contactor to close exceeds the time taken for the slowest power switch (50) in use to cut off power. It might be decided to incorporate this feature in the coupler design anyway to avoid live connectors if some other switching or shuttering arrangement does not already provide this facility.

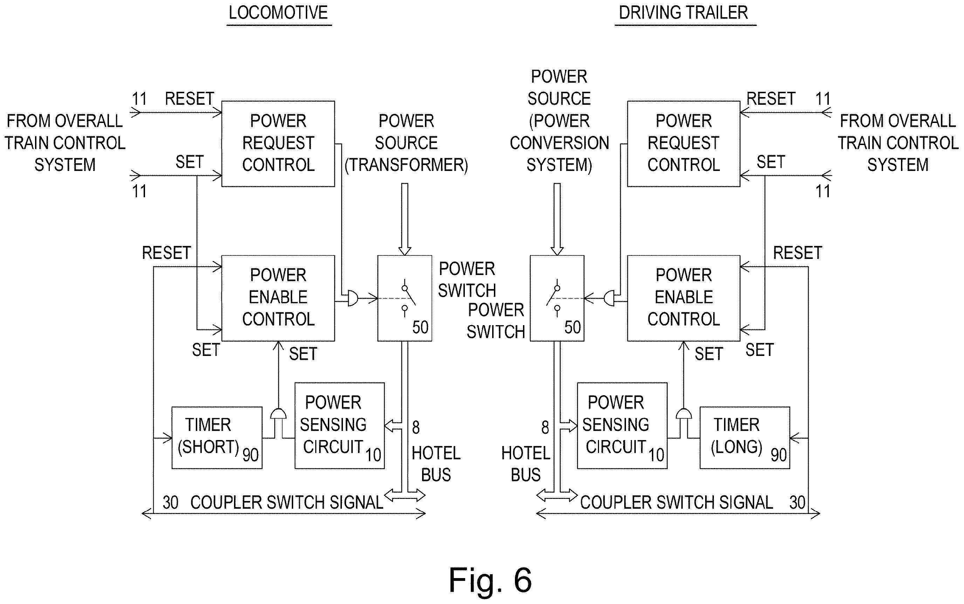

Returning to the main power control processes, the arrangements are shown in more detail in figure 6. A coupling or uncoupling event activates the common coupler switch signal (30) and resets the power enable controls in all vehicles supplying hotel power, turning off the power switches (50). When the common switch signal (30) ceases, coupling or uncoupling operations are complete and this event starts the delay timers (90) in the control systems of each vehicle which can supply hotel power. When that time delay is up, a power sensing circuit (10) in each control system examines the hotel bus to see if power is already being supplied. If not, the power enable control is set which causes that vehicle to switch on its own power to the hotel bus. If power is already on, the power enable control is not set and the corresponding power switch (50) remains in the 'off' state.

In the meantime, the overall train control system is operating to establish what the new train formation is and the status of various systems within it. The exact form and operation of this overall train control system is outside the scope of this invention, but typically it will be distributed in various key vehicles such as locomotives, power cars and driving trailers, operating in a collaborative way by sharing data through dedicated connectors on the automatic couplers and information data bus lines present throughout the train. For the purposes of this invention, it is only necessary to state that sooner or later the overall train control system makes some decisions about which vehicles should now be supplying hotel power, and sends commands (11) to the control systems of each vehicle accordingly. That might result in a change of the switch (50) positions to alter the current status of power generation, or it might leave the settings unchanged.

There is thus a defined hierarchy of control for the arrangement of hotel power generation; an initial 'quick and expedient' process determined by priorities according to vehicle types and their assigned time delays, and a final 'more considered' process determined by a comprehensive and complex train control system. This 'more considered' process is responsible for such functions as switching hotel power generation between locomotives and driving trailers, taking account of such factors as battery charge level, charging history to optimise battery life, train schedules, route topography, punctuality, and other known methods to optimise performance in desired ways.

In addition to the train formations described above, where each train has one or more coaches but only one locomotive and one driving trailer, it may be desired to allow for more complex train formations. For example, a great variety of traction types might be available, such as diesel and electric locomotives of various sizes, diesel power cars, electric multiple units, etc. When only one of each type of traction unit is present in a train, hotel power generation is sorted out automatically using the different time delays. Then the overall train control system can take different decisions later if necessary. But what happens if more than one traction unit of the SAME type is in the formation?

If the hotel bus uses AC power distribution (as it often will), both frequency and phase need to be aligned as well as voltage if more than one vehicle is to contribute power to the bus at the same time. This is not a problem for traction units operating from an overhead AC line, as they all have the same source. Diesel traction units, and driving trailers using recycled power, are a different matter though: individually they will be generating power at something like the right frequency and at an arbitrary phase relative to each other. Coupling them together would result in overloads and power surges followed by power cut off as overload protection circuits operate. Solving this problem is rather like synchronising power stations on the national grid, on a smaller scale.

The proposed solution to this problem is to have a 'soft start' approach. When, for example, two diesel power cars are coupled together and after their defined time delay they both try to supply hotel power at the same time, full power is not applied immediately. Instead, the control system arranges for power from each vehicle to be supplied via a resistance to limit the current to a low level so that overload protection circuits do not trip.

The resulting low voltage waveform on the hotel bus, which will be a combination of the power generated by each vehicle, is monitored by each control circuit. Using known signal processing techniques each control circuit can identify the frequency and phase of the other generator, and can adjust first the frequency and then the phase of its own power generation to be more in alignment. At the same time, of course, the other control circuit is performing similar adjustments in the opposite direction so that the frequency and then the phase of both power generation sources converge. Once the two sources have synchronised, full power is then switched on by the control systems of both vehicles.

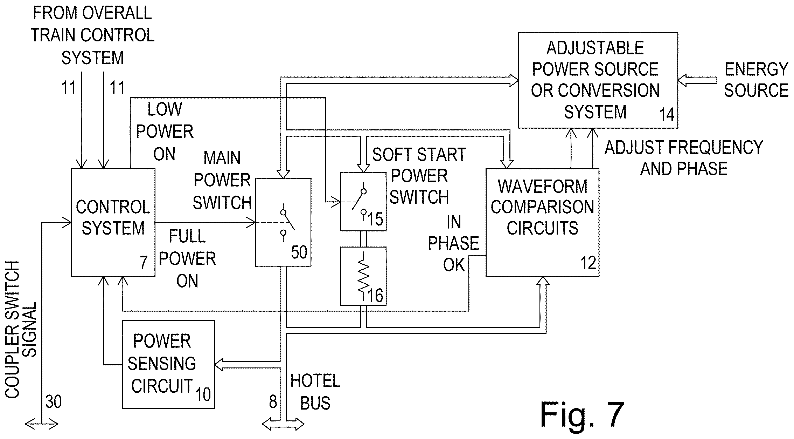

The control arrangements for performing this function are shown in figure 7. The source of hotel power (14) in the vehicle could be a power conversion system operating from a storage battery (e.g. a driving trailer); a diesel engine and alternator (e.g. a diesel locomotive); a power conversion system operating from a storage battery and a dynamo or rectified alternator in a hybrid drive vehicle (e.g a hybrid drive diesel power car); a power conversion system operating from a DC supply (e.g. a third rail electric multiple unit); or some other source. Whatever the source, however, it needs to be controllable in frequency and ultimately phase, for example via an engine speed control system or using electronic waveform generation.

The control system (7) operates in the same way as before, but now after the time delay caused by the coupling or uncoupling event, and if power is not present, the main power switch (50) remains off but the soft start power switch (15) is turned on. This connects the power source to the hotel bus (8) via a resistance (16) which limits the current to a low level. If a second power-generating vehicle of the same type is also present in the train formation, it will do the same thing at the same time. The resulting voltage waveform on the hotel bus (8) will be low amplitude (because of the partial load presented by the coaches and the effect of the resistances 16), but its shape will be a representation of the average of the two power sources from the two vehicles coupled together. The waveform comparison circuits (12) compensate for this lower amplitude, and compare the end result with the waveform being generated by the local power source.

Using well known signal processing techniques, the waveform comparison circuits can then establish whether the frequency of supply being generated locally is higher or lower than the remote source. This result then activates signals to control the power source (14) to alter the frequency to a more similar value to that being generated by the remote source. Naturally the other source performs similar adjustments in the other direction. When the frequencies of the two sources are aligned, finer adjustments are carried out to align the phase of the two sources.

When the waveform on the hotel bus is of the same phase as that being generated locally, and the waveform comparison circuits are satisfied that everything is stable, they send an 'in phase OK' signal to the control system which turns on the main power switch (50). The remote vehicle will do the same at approximately the same time, and both vehicles now supply power to the hotel bus.

Once everything is operating successfully in parallel, established methods such as current sensing are used to keep power generation from the two sources in synchronism.

In addition to the automatic activation of two power sources through time delays as described above, the overall train control system may choose to activate them via commands (11), initiating the same 'soft start' process. In the case where one of the desired power-supplying vehicles does not have a 'soft start' facility, the sequence is first to turn on that vehicle with full power, then the others with 'soft start' monitor the full amplitude waveform on the hotel bus and adapt their own power generation accordingly before they switch on full power.

Similar principles can be applied if three or more vehicles of the same type are required to generate hotel power simultaneously under some operating circumstances, with appropriate design of the waveform comparison circuits.

Naturally some vehicle types will be unable to control the frequency and phase of their power generation, so if they are required to supply hotel power at the same time as other vehicles then those other vehicles must be controllable or intrinsically synchronised. It might be decided that it is impractical to control adequately two sources derived from alternators driven from diesel engines, instead only allowing one generator of this type on the hotel bus at a time and relying on electronic power conversion systems in other vehicles to follow its frequency fluctuations.

In addition to matching frequency and phase, voltages need to be controlled if multiple vehicles are to bear their appropriate share of the hotel bus load. This function is achieved by current sensing and voltage regulation circuits of known form in the control circuits of the corresponding vehicles, not shown in detail in the diagrams. This function is also needed if the hotel bus is DC rather than AC.

Depending on the overall requirements of the railway operating authorities, the incorporation of various levels of features from this invention allows a very flexible automated energy distribution system to be created for trains having a great variety of formations.

## Claims

1. An energy management system for a train formation consisting of the following vehicles:
one or more unpowered vehicles, wherein the energy management system is arranged to provide electrical power for services in the one or more unpowered vehicles, supplied through a hotel bus (8) that is arranged to connect couplable vehicles in parallel electrically via connectors at both ends of each vehicle;
a locomotive or power car, wherein the energy management system in the locomotive or power car is arranged to provide both traction and electrical power for services from a primary energy source such as a diesel engine and generator or overhead power line, pantograph and transformer;
a rail vehicle, for incorporation into a train formation, wherein the energy management system in the rail vehicle is arranged to recycle regenerative braking energy into electrical power for services, the energy management system in the rail vehicle comprising:
one or more drives (2) between wheels and electric traction motors (1) in a vehicle body arranged to be used as generators during regenerative braking;
an energy management unit (3) that is arranged to regulate the supply of electrical power from those motors;
a storage battery or other electrical energy storage device or system (4) that is arranged to absorb energy from the motors (1) via the energy management unit (3) providing a recycled energy source;
a power conversion system (5) that is arranged to convert energy from the storage battery (4) or energy management unit (3) into electrical power for services such as heating, lighting and air conditioning to other vehicles of the train formation via the hotel bus (8); and
a control system (7) that is arranged to control the supply of electrical power for services from the power conversion system (5) in this vehicle via the hotel bus (8) to replace or augment power from sources in other vehicles of the train formation such as a locomotive, power car, generator car or pantograph car,
wherein the energy management system in the rail vehicle is arranged to recycle energy from regenerative braking in this vehicle via the hotel bus (8) into power for services in other vehicles of the train formation such that the overall energy efficiency of the train formation is improved;
wherein the energy management unit (3) is arranged to control the switching of power (6) to the hotel bus (8) from either the primary energy source in one vehicle or the recycled energy source in the other vehicle by coordinating the control systems of the vehicle arranged to provide electrical power from the primary energy source and the vehicle arranged to provide electrical power from the recycled energy source;
the decision of which source to use being made automatically according to predetermined conditions such as the level of recycled energy in the storage battery (4);
**characterised in that** the control system (7) of each vehicle capable of supplying power to the hotel bus (8) is arranged to check whether power is currently being supplied to the hotel bus (8) from another source before acting on an instruction to supply its own power to the bus (8); and
wherein the energy management system in the rail vehicle is also arranged to maintain power for hotel services in the unpowered vehicles of the train formation when the locomotive or power car is detached from the train formation.

2. An energy management system for a train formation according to claim 1, wherein each vehicle is equipped with couplers (10) that are arranged to provide a signal (30) to indicate when coupling or uncoupling of vehicles is taking place;
and wherein the energy management system is arranged to receive this signal (30) from a coupler of a vehicle capable of supplying power to the hotel bus (8) and to cause a rapid disconnection of the power source and a restart of the processes required to reconnect it.

3. An energy management system for a train formation according to claim 2, wherein the control system (40) of each vehicle capable of supplying power to the hotel bus (8) is arranged to wait for a predetermined delay time after disconnecting power as a result of coupling or uncoupling operations before attempting to reconnect power to the hotel bus (8);
the delay time being assigned different values for different vehicles or types of vehicle, so that the vehicle with the shortest delay time achieves priority in supplying hotel power to the hotel bus (8) when more than one vehicle that can supply power is present in a rearranged train formation.

4. An energy management system for a train formation according to claim 3, wherein the priorities for hotel power generation achieved according to time delays after changes in train formation as described in claim 3 apply for a period, but are later overridden by a higher level control algorithm having different priorities when a new train formation and status of systems within the new train formation has been determined.

5. An energy management system for a train formation according to claim 4, wherein the higher level control algorithm is arranged to determine whether to allow more than one vehicle to supply power to the hotel bus (8) and to instruct the control systems (40) in those vehicles to start their processes for connecting their power to the bus.

6. An energy management system for a train formation according to claim 5, wherein the control systems (40) of one or more vehicles capable of supplying power to the hotel bus (8) are arranged to monitor the voltage on the bus (8), and also the frequency and phase if AC, using a soft start method, and to adapt the local power generation characteristics to those parameters before connecting the local power source to the hotel bus (8) after being instructed to do so by the control algorithm.

7. An energy management system for a train formation according to any of the previous claims, wherein the interconnection between the vehicles of the train formation for power transfer is a hotel bus (8) designed for the maximum power load required by services only, and no higher power bus systems are used between vehicles such as traction power bus lines or high voltage bus lines.

8. An energy management system for a train formation according to any of the previous claims, wherein the train formation is arranged so that it can be split into two sections; one section containing a locomotive or power car with a primary energy source, the other section containing a vehicle with a recycled energy source; the energy management system being arranged such that, when the train splits, hotel power for services is maintained to both sections.

## Patentansprüche

1. Energiemanagementsystem für eine Zugzusammensetzung, bestehend aus den folgenden Fahrzeugen:
einem oder mehreren nicht angetriebenen Fahrzeugen, wobei das Energiemanagementsystem angeordnet ist, um elektrische Energie für Dienste in dem einen oder den mehreren nicht angetriebenen Fahrzeugen bereitzustellen, die über einen Hotelbus (8) zugeführt wird, der angeordnet ist, um koppelbare Fahrzeuge über Verbinder an beiden Enden von jedem Fahrzeug elektrisch parallel zu verbinden;
einer Lokomotive oder einem Triebkopf, wobei das Energiemanagementsystem in der Lokomotive oder dem Triebkopf so angeordnet ist, um sowohl Antriebsenergie als auch elektrische Energie für Dienste von einer primären Energiequelle, wie z. B. einem Dieselmotor und Generator oder einer Oberleitung, einem Stromabnehmer und einem Transformator, bereitzustellen;
einem Schienenfahrzeug, zur Integration in eine Zugzusammensetzung, wobei das Energiemanagementsystem in dem Schienenfahrzeug angeordnet ist, um regenerative Bremsenergie in elektrische Energie für Dienste zu recyceln, das Energiemanagementsystem in dem Schienenfahrzeug umfassend:
einen oder mehrere Antriebe (2) zwischen Rädern und elektrischen Fahrmotoren (1) in einem Fahrzeugkörper, die angeordnet sind, um bei einem regenerativen Bremsen als Generatoren verwendet zu werden;
eine Energiemanagementeinheit (3), die angeordnet ist, um die Zufuhr von elektrischer Energie von diesen Motoren zu regulieren;
eine Speicherbatterie oder eine andere elektrische Energiespeichervorrichtung oder -system (4), die/das angeordnet ist, um es über die Energiemanagementeinheit (3) Energie von den Motoren (1) aufzunehmen, und eine recycelte Energiequelle bereitstellt;
ein Energieumwandlungssystem (5), das angeordnet ist, um Energie von der Speicherbatterie (4) oder der Energiemanagementeinheit (3) in elektrische Energie für Dienste, wie z. B. Heizung, Beleuchtung und Klimatisierung für andere Fahrzeuge der Zugzusammensetzung über den Hotelbus (8) umzuwandeln; und
ein Steuersystem (7), das angeordnet ist, um die Zufuhr von elektrischer Energie für Dienste von dem Energieumwandlungssystem (5) in diesem Fahrzeug über den Hotelbus (8) zu steuern, um Energie aus Quellen in anderen Fahrzeugen der Zugzusammensetzung, wie z. B. einer Lokomotive, einem Triebkopf, einem Generatorwagen oder einem Stromabnehmerwagen, zu ersetzen oder zu verstärken,
wobei das Energiemanagementsystem in dem Schienenfahrzeug angeordnet ist, um Energie aus regenerativem Bremsen in diesem Fahrzeug über den Hotelbus (8) in Strom für Dienste in anderen Fahrzeugen der Zugzusammensetzung zu recyceln, sodass die Gesamtenergieeffizienz der Zugzusammensetzung verbessert wird;
wobei die Energiemanagementeinheit (3) angeordnet ist, um das Schalten von Energie (6) zu dem Hotelbus (8) entweder von der primären Energiequelle in einem Fahrzeug oder der recycelten Energiequelle in dem anderen Fahrzeug zu steuern, indem die Steuersysteme des Fahrzeugs, das angeordnet ist, um elektrische Energie von der primären Energiequelle bereitzustellen, und des Fahrzeugs, das angeordnet ist, um elektrische Energie von der recycelten Energiequelle bereitzustellen, koordiniert werden;
wobei die Entscheidung, welche Quelle zu verwenden ist, automatisch in Abhängigkeit von vorbestimmten Bedingungen getroffen wird, wie z. B. dem Pegel der recycelten Energie in der Speicherbatterie (4);
**dadurch gekennzeichnet, dass** das Steuersystem (7) von jedem Fahrzeug, das in der Lage ist, Energie zu dem Hotelbus (8) zuzuführen, angeordnet ist, um zu prüfen, ob gerade Energie von einer anderen Quelle zu dem Hotelbus (8) zugeführt wird, bevor es auf eine Anweisung zum Zuführen seiner eigenen Energie zu dem Bus (8) reagiert; und
wobei das Energiemanagementsystem in dem Schienenfahrzeug auch angeordnet ist, um Energie für Hoteldienste in den nicht angetriebenen Fahrzeugen der Zugzusammensetzung aufrechtzuerhalten, wenn die Lokomotive oder der Triebkopf von der Zugzusammensetzung getrennt ist.

2. Energiemanagementsystem für eine Zugzusammensetzung nach Anspruch 1, wobei jedes Fahrzeug mit Kupplungen (10) ausgerüstet ist, die angeordnet sind, um ein Signal (30) bereitstellen, um anzugeben, wenn ein An- oder Abkuppeln von Fahrzeugen stattfindet;
und wobei das Energiemanagementsystem angeordnet ist, um dieses Signal (30) von einem Koppler eines Fahrzeugs, das in der Lage ist, Energie zu dem Hotelbus (8) zuzuführen, zu empfangen und ein schnelles Abschalten der Energiequelle und einen Neustart der zum Wiedereinschalten erforderlichen Prozesse zu bewirken.

3. Energiemanagementsystem für eine Zugzusammensetzung nach Anspruch 2, wobei das Steuersystem (40) von jedem Fahrzeug, das in der Lage ist, Energie zu dem Hotelbus (8) zuzuführen, angeordnet ist, um nach Unterbrechen der Energie als Resultat von An- oder Abkupplungsvorgängen eine vorbestimmte Verzögerungszeit abwartet, bevor es versucht, wieder Energie an dem Hotelbus (8) anzuschließen;
wobei der Verzögerungszeit für verschiedene Fahrzeuge oder Fahrzeugtypen unterschiedliche Werte zugewiesen werden, sodass das Fahrzeug mit der kürzesten Verzögerungszeit Vorrang bei der Zuführung von Hotelenergie zu dem Hotelbus (8) erreicht, wenn mehr als ein Fahrzeug, das Energie zuführen kann, in einer neu angeordneten Zugzusammensetzung vorhanden ist.

4. Energiemanagementsystem für eine Zugzusammensetzung nach Anspruch 3, wobei die Prioritäten für die Erzeugung von Hotelenergie, die entsprechend den Zeitverzögerungen nach Änderungen in einer Zugzusammensetzung wie in Anspruch 3 beschrieben erreicht werden, für eine Zeitspanne gelten, aber später von einem übergeordneten Steuerungsalgorithmus mit anderen Prioritäten außer Kraft gesetzt werden, wenn eine neue Zugzusammensetzung und der Zustand von Systemen innerhalb der neuen Zugzusammensetzung bestimmt wurde.

5. Energiemanagementsystem für eine Zugzusammensetzung nach Anspruch 4, wobei der übergeordnete Steueralgorithmus angeordnet ist, um zu bestimmen, ob erlaubt wird, dass mehr als ein Fahrzeug Energie zu dem Hotelbus (8) zuführt, und um die Steuersysteme (40) in diesen Fahrzeugen anzuweisen, ihre Prozesse zum Anschließen ihrer Energie an den Bus zu starten.

6. Energiemanagementsystem für eine Zugzusammensetzung nach Anspruch 5, wobei die Steuersysteme (40) von einem oder mehreren Fahrzeugen, die in der Lage sind, Energie zu dem Hotelbus (8) zuzuführen, angeordnet sind, um die Spannung auf dem Bus (8) und auch die Frequenz und die Phase, wenn es sich um Wechselstrom handelt, unter Verwendung eines Sanftstartverfahrens überwachen und die lokalen Energieerzeugungscharakteristiken an diese Parameter anpassen, bevor sie die lokale Energiequelle mit dem Hotelbus (8) verbinden, nachdem sie durch den Steueralgorithmus dazu angewiesen wurden.

7. Energiemanagementsystem für eine Zugzusammensetzung nach einem der vorherigen Ansprüche, wobei die Verbindung zwischen den Fahrzeugen der Zugzusammensetzung zur Energieübertragung ein Hotelbus (8) ist, der nur für die maximale, von den Diensten benötigte Energie ausgelegt ist, und keine Bussysteme mit höherer Energie zwischen den Fahrzeugen, wie beispielsweise Bahnstrombusleitungen oder Hochspannungsbusleitungen, verwendet werden.

8. Energiemanagementsystem für eine Zugzusammensetzung nach einem der vorherigen Ansprüche, wobei die Zugzusammensetzung angeordnet ist, sodass sie in zwei Abschnitte aufgeteilt werden kann; wobei ein Abschnitt eine Lokomotive oder einen Triebkopf mit einer primären Energiequelle und der andere Abschnitt ein Fahrzeug mit einer recycelten Energiequelle enthält; wobei das Energiemanagementsystem angeordnet ist, um, wenn der Zug aufgeteilt wird, die Hotelenergie für Dienste für beide Abschnitte aufrechtzuerhalten.

## Revendications

1. Système de gestion d'énergie pour une formation de train constituée des véhicules suivants :
un ou plusieurs véhicules non motorisés, ledit système de gestion d'énergie étant agencé pour fournir une puissance électrique destinée à des services dans le ou les véhicules non motorisés, fournie par l'intermédiaire d'un bus électrique hôtelier (8) qui est agencé pour connecter des véhicules pouvant être couplés électriquement en parallèle par l'intermédiaire des connecteurs au niveau des deux extrémités de chaque véhicule ;
une locomotive ou une voiture motrice, ledit système de gestion d'énergie dans la locomotive ou la voiture motrice étant agencée pour fournir à la fois de la traction et une puissance électrique pour les services à partir d'une source d'énergie primaire telle qu'un moteur diesel et un générateur ou une ligne électrique aérienne, un pantographe et un transformateur ;
un véhicule ferroviaire, destiné à être incorporé dans une formation de train, ledit système de gestion d'énergie dans le véhicule ferroviaire étant agencé pour recycler l'énergie de freinage régénératif en une puissance électrique pour les services, le système de gestion d'énergie dans le véhicule ferroviaire comprenant :
un ou plusieurs dispositifs d'entraînements (2) entre les roues et les moteurs électriques de traction (1) dans un corps de véhicule agencés pour être utilisés en tant que générateurs durant le freinage régénératif ;
une unité de gestion d'énergie (3) qui est agencée pour réguler l'alimentation en puissance électrique à partir de ces moteurs ;
une batterie de stockage ou un autre dispositif ou système de stockage d'énergie électrique (4) qui est agencé pour absorber l'énergie provenant des moteurs (1) par l'intermédiaire de l'unité de gestion d'énergie (3) fournissant une source d'énergie recyclée ;
un système de conversion d'énergie (5) qui est agencé pour convertir l'énergie provenant de la batterie de stockage (4) ou de l'unité de gestion d'énergie (3) en puissance électrique pour des services tels que le chauffage, l'éclairage et la climatisation vers d'autres véhicules de la formation ferroviaire par l'intermédiaire du bus électrique hôtelier (8) ; et
un système de commande (7) qui est agencé pour commander l'alimentation en puissance électrique pour les services du système de conversion d'énergie (5) dans ce véhicule par l'intermédiaire du bus électrique hôtelier (8) pour remplacer ou augmenter la puissance provenant de sources dans d'autres véhicules de la formation de train telle qu'une locomotive, une voiture motrice, une voiture génératrice ou une voiture à pantographe,
ledit système de gestion d'énergie dans le véhicule ferroviaire étant agencé pour recycler l'énergie provenant
du freinage régénératif dans ce véhicule par l'intermédiaire du bus électrique hôtelier (8) en puissance pour des services dans d'autres véhicules de la formation de train de sorte que l'efficacité énergétique globale de la formation de train soit améliorée ;
ladite unité de gestion d'énergie (3) étant agencée pour commander la commutation de la puissance (6) vers le bus électrique hôtelier (8) à partir de la source d'énergie primaire dans un véhicule ou de la source d'énergie recyclée dans l'autre véhicule en coordonnant les systèmes de commande du véhicule agencé pour fournir une puissance électrique à partir de la source d'énergie primaire et du véhicule agencé pour fournir une puissance électrique à partir de la source d'énergie recyclée ;
la décision concernant la source à utiliser étant prise automatiquement selon des conditions prédéfinies telles que le niveau d'énergie recyclée dans la batterie de stockage (4) ;
**caractérisé en ce que** le système de commande (7) de chaque véhicule capable de fournir une puissance au bus électrique hôtelier (8) est agencé pour vérifier si la puissance est actuellement fournie au bus électrique hôtelier (8) à partir d'une autre source avant d'agir sur une commande pour fournir sa propre puissance au bus électrique (8) ; et
ledit système de gestion d'énergie dans le véhicule ferroviaire étant également agencé pour maintenir la puissance pour les services hôteliers dans les véhicules non motorisés de la formation de train lorsque la locomotive ou la voiture motrice est détachée de la formation de train.

2. Système de gestion d'énergie pour une formation de train selon la revendication 1, chaque véhicule étant équipé de coupleurs (10) qui sont agencés pour fournir un signal (30) destiné à indiquer le moment où le couplage ou le découplage des véhicules a lieu ;
et ledit système de gestion d'énergie étant agencé pour recevoir ce signal (30) en provenance d'un coupleur d'un véhicule capable de fournir une puissance au bus électrique hôtelier (8) et d'entraîner une déconnexion rapide de la source d'énergie et un redémarrage des processus nécessaires pour la reconnecter.

3. Système de gestion d'énergie pour une formation de train selon la revendication 2, ledit système de commande (40) de chaque véhicule capable de fournir une puissance au bus électrique hôtelier (8) étant agencé pour attendre un temps de retard prédéfini après la déconnexion de la puissance en raison d'opérations de couplage ou de découplage avant de tenter de reconnecter la puissance au bus électrique hôtelier (8) ;
le temps de retard se voyant affecté des valeurs différentes pour différents véhicules ou types de véhicule, afin que le véhicule avec le temps de retard le plus court obtienne la priorité dans la fourniture de puissance hôtelière au bus électrique hôtelier (8) lorsque plus d'un véhicule pouvant fournir une puissance est présent dans un réagencement de la formation de trains.

4. Système de gestion d'énergie pour une formation de train selon la revendication 3, lesdites priorités pour la production de puissance hôtelière obtenues selon des retards de temps après des changements dans la formation de train tels que décrits dans la revendication 3 s'appliquent pendant une période, mais sont ensuite annulées par un algorithme de commande de niveau supérieur possédant des priorités différentes lorsqu'une nouvelle formation de train et l'état des systèmes au sein de la nouvelle formation de train ont été déterminés.

5. Système de gestion d'énergie pour une formation de train selon la revendication 4, ledit algorithme de commande de niveau supérieur étant agencé pour déterminer si plus d'un véhicule peut être autorisé à fournir une puissance au bus électrique hôtelier (8) et à commander les systèmes de commande (40) dans ces véhicules pour démarrer leurs processus en vue de la connexion de leur puissance au bus électrique.

6. Système de gestion d'énergie pour une formation de train selon la revendication 5, lesdits systèmes de commande (40) d'un ou plusieurs véhicules capables de fournir une puissance au bus électrique hôtelier (8) étant agencés pour surveiller la tension sur le bus électrique (8), et également la fréquence et la phase si le courant est alternatif, CA, à l'aide d'un procédé de démarrage progressif, et pour adapter les caractéristiques de production de puissance locale à ces paramètres avant la connexion de la source de puissance locale au bus électrique hôtelier (8) après avoir été commandé de le faire par l'algorithme de commande.

7. Système de gestion d'énergie pour une formation de train selon l'une quelconque des revendications précédentes, ladite interconnexion entre les véhicules de la formation de train pour le transfert de puissance étant un bus électrique hôtelier (8) conçu pour la charge de puissance maximale requise uniquement par les services, et aucun système de bus électrique de haute puissance n'étant utilisé entre les véhicules tels que les lignes de bus de puissance de traction ou les lignes de bus à haute tension.

8. Système de gestion d'énergie pour une formation de train selon l'une quelconque des revendications précédentes, ladite formation de train étant agencée afin qu'elle puisse être divisée en deux sections ; une section contenant une locomotive ou une voiture motrice avec une source d'énergie primaire, l'autre section contenant un véhicule avec une source d'énergie recyclée ; le système de gestion d'énergie étant agencé de sorte que, lorsque le train se sépare, la puissance hôtelière pour les services est maintenue dans les deux sections.
